# EUROPEAN PATENT APPLICATION

(11) **EP 3 761 005 A1**
(43) Date of publication of application: **06.01.2021**
(21) Application number: 19184129.5
(22) Date of filing: 03.07.2019
(51) Int. Cl.: G01N 17/00, G01N 17/04

(54) **DYNAMIC TEST LOOP FOR DETERMINING MOLTEN SALT CORROSION**

(71) Applicant: Cockerill Maintenance & Ingenierie S.A., 4100 Seraing (BE)
(72) Inventor: BUCCI, Julie, 4020 Liège (BE); SMOLDERS, Manuel, 4537 Verlaine (BE); HARZALLAH, Ridha, 4000 Liège (BE); WINAND, Stéphane, 4031 Angleur (BE)
(74) Representative: Pronovem

(57) **Abstract**

The present invention relates to an installation (1) for carrying out dynamic corrosion and degradation tests on samples (4) being in contact with a fluid, comprising:
- a tank (2) for heating and storing, in use, a fluid at a given temperature;
- a looped circuit comprising a pipe (3) containing the fluid during the tests, having a first end and a second end both connected to the tank (2);
- a pump (8) for circulating the fluid in the pipe (3);
- a plurality of test stands located along different portions of the pipe (3), each test stand comprising a sample holder (5B) holding, in use, at least a sample (4) in said portion of the pipe (3) and an inductor (6), wrapped around said portion of pipe (3) and intended to heat the sample holder (5B) to provide, in use, a gradient of temperature between the fluid and the sample (4) during the test.

## Description

### Field of the Invention

The present invention relates to an installation for carrying out degradation and corrosion tests on samples exposed to a fluid such as a melted medium in a circulation loop line, and in particular dynamic corrosion tests on samples exposed to molten salt in the loop.

The present invention also relates to the method for achieving corrosion tests in the installation.

The present invention is applicable in technical fields where corrosion of molten salt corrosion or any other fluid at a given temperature has to be monitored within an installation, and in the particular in the field of concentrated solar power (CSP) technology.

### Prior Art

In the molten salt solar tower power plants, and in other fields where molten salt is used, there is a need to know the degradation of the equipment which is in contact with the hot salt.

As molten salt behaviour in these technologies is still at an early stage of knowledge, most of the market actors currently base their design on literature-available data. The Applicant has already gone deeper into salt expertise by performing static corrosion tests. In these static tests, the temperature of the metal used in the solar receivers is equal to the salt temperature and there is no salt circulation and further no dynamic effect (erosion and dilution).

Improving and completing corrosion understanding however will require performing dynamic corrosion tests, especially with use of alloys typically of interest in solar receiver tubes (nickel-based superalloys 230, Inconel 625, etc.).

To this end, static and dynamic corrosion tests have been developed, in which samples made of different materials such as steel, carbon, stainless steel, etc. are put into contact with salt, and in conditions as close as possible of normal operation conditions. Many studies are aiming at understanding the actual corrosion mechanism and to classify the different alloys for their suitability to be used in molten salt heat exchangers and in thermal storage applications.

Document EP 3 239 690 discloses an installation for carrying out degradation tests on specimens exposed to materials in a melted state (such as metals, alloys, salts or glass, etc.). The method disclosed therein ensures continuous stable test conditions throughout the duration of the test. The dynamic test is limited to a closed circuit established between a storage tank and a testing chamber. In order to control the degradation process developed during the test, the samples are introduced beforehand into the testing chamber. This system ensures continuous circulation of the melted medium from the testing chamber to the tank and vice versa. In the tank, the optimal temperature of the test is maintained by a temperature control system, acting on a system of electrical resistors arranged in the walls of the tank. The assembly of conduits through which the melted fluid circulates is duly heated and thermally insulated in order to minimize the loss of temperature in the fluid, in addition to preventing any phase change that could lead to mechanical problems in auxiliary systems.

In the document *"*A forced-circulation loop for corrosion studies: Hastelloy N compatibility with NaBF4-NaF (92-8 mole%)", of J.W KOGER, Oak Ridge National Laboratory, ORNL-TM-4221, December 1972, a molten salt forced-circulation loop is described. Standardized test facilities were developed and operated for investigating the compatibility of structural materials with flowing molten fluoride salts. In this document, a sophisticated pumped loop system is designed and operated to study the compatibility of Hastelloy N to flowing NaBF₄-NaF (92-8 mole %) at a maximum temperature of 620°C and a minimum temperature of 454°C. The design of this loop allows to remove or add corrosion test specimens without draining the fluid from the loop. Principal test variables include temperature, velocity, time, and impurities in the fluid. To simulate MSBR (molten salt breeder reactor) coolant circuit conditions, the salt is circulated in a loop piping at a velocity of about 3.05 m/s at bulk fluid temperatures from 454°C to 620 °C. Corrosion test specimens are installed at three locations in the loop circuit for exposure to the salt at three different temperatures (620°C, 537°C and 454°C) and at bulk flow velocities of 3.05 m/s and 6.09 m/s.

Molten salt technology has been used for many years in thermal storage, industrial process heat transfer, nuclear reactors, etc. Currently, it is very challenging to improve the accuracy and performances of a molten salt test loop to know its material compatibility. It is important to obtain results which are closer to the real conditions, by performing a test when taking into account material behavior in molten salt.

### Aims of the Invention

The present invention aims to provide a high performance test installation that enables carrying out corrosion dynamic tests on sample parts in contact with a fluid.

In particular, a goal of the invention is allowing to obtain representative corrosion and degradation tests to accurately determine the behaviour of actual solar receivers.

The invention further aims to provide a dynamic corrosion test loop exposing samples to conditions as close as possible to real use conditions, for example in terms of temperature differences, flow rate, flow type, etc.

In particular, the invention aims to obtain a dynamic corrosion test loop presenting high flexibility in terms of thermal gradient between the circulating the molten salt and the test tube specimens, as well as improved accuracy thanks to fast and precise reaching of desired temperature.

### Summary of the Invention

A first aspect of the present invention relates to an installation for carrying out dynamic corrosion and degradation tests on samples being in contact with a fluid, comprising :
- a tank for heating and storing, in use, a fluid at a given temperature ;
- a looped circuit comprising a pipe containing the fluid during the tests, having a first end and a second end both connected to the tank ;
- a pump for circulating the fluid in the pipe ;
- a plurality of test stands located along different portions of the pipe, each test stand comprising a sample holder holding, in use, at least a sample in said portion of the pipe and an inductor, wrapped around said portion of pipe and intended to heat the sample holder to provide, in use, a gradient of temperature between the fluid and the sample during the test.

The present invention also concerns a shipping container comprising the aforementioned installation.

According to preferred embodiments of the invention, the installation is further limited by one of the following features or by a suitable combination thereof:
- the installation comprises an electrical resistor provided around or within the tank to heat the fluid ;
- the pipe is tilted from the horizontal, preferably at about 4° from the horizontal ;
- the heated sample holders and the corresponding inductors are in the number of one or more ;
- the tank comprises an external insulation and draining means ;
- the installation also comprises a cooling device to avoid the overheating of the fluid ;
- the cooling device comprises a heat exchanger.

Another aspect of the present invention relates to a method for carrying out dynamic corrosion and degradation tests on samples being in contact with a fluid, by means of the aforementioned installation, comprising at least the following steps of :
- putting metal samples on each of the test stands within the pipe ;
- heating the fluid contained in the tank ;
- circulating the fluid in the pipe according to the looped circuit by activating the pump ;
- cooling the pipe in the cooler by circulating therein a cooling fluid ;
- heating the samples in the test stands using the corresponding inductor to create at each heated test stand a temperature gradient between the fluid and the sample ;
- after having stopped the heating of the fluid and having drained the fluid out of the installation, opening the test stands, removing the samples therefrom, and performing degradation tests on the samples.

According to preferred embodiments of the invention, the method is further limited by one of the following features or by a suitable combination thereof:
- the degradation tests are weight loss measurement after descaling and micrographic cross-section examination ;
- the fluid is circulated at a velocity comprised between 2 and 8 m/s and preferably at a velocity of about 4 m/s ;
- the minimal temperature of the sample holders is comprised between 100°C and 290°C and the maximal temperature of the sample holders is comprised between 380°C and 800°C ;
- the heating is operated in order to have, with sample holders at least in number of five, an unheated sample holder and four sample holders respectively heated at 600°C, 625°C, 650°C and 700°C ;
- the fluid is heated in the tank from 100°C to 700°C ;
- the pump is run from 7 to 15 m³/s ;
- the fluid is a molten salt or thermal oil.

### Brief Description of the Drawings

Figures 1A and 1B schematically represent a particular embodiment for an installation intended to carry out dynamic corrosion and degradation tests on samples exposed to a medium in a melted state according to the present invention.
Figure 2 represents a detailed cross-sectional view of the installation of figure 1B.
Figure 3 represents a detailed view of a test-stand of the installation of the present invention, comprising a sample holder and an inductor.
Figure 4 is a cross-sectional view of the test stand of figure 3.
Figure 5 represents a detailed cross-sectional view of the cooling device and the induction power system of the installation according to the invention.
Figure 6 represents a detailed cross-sectional view of the tank of fluid and the pump of the installation of the present invention.

### Reference Symbols

- 1: Installation for carrying out dynamic corrosion and degradation tests
- 2: Hot pot of fluid
- 3: Pipe (similar to test tube)
- 4: Sample
- 5A: Unheated sample holder
- 5B: Heated sample holder
- 6: Inductor for heating a heated sample holder
- 7: Power system/supply
- 8: Pump for circulating the fluid
- 9: Heat exchanger (cooling device)
- 10: DCS (digital control system)
- 11: Air supply
- 12: Drain tank
- 13: Fluid
- 14: Heating unit
- 15: Pressure sensor
- 16: Flow sensor
- 17: Temperature sensor
- 18: Pyrometer
- 19: Air blower
- 21: Tank insulation

### Description of Preferred Embodiments of the Invention

The present invention relates to an installation 1 to carry out dynamic corrosion and/or degradation tests on samples 4 being in contact with a fluid circulating in a pipe 3.

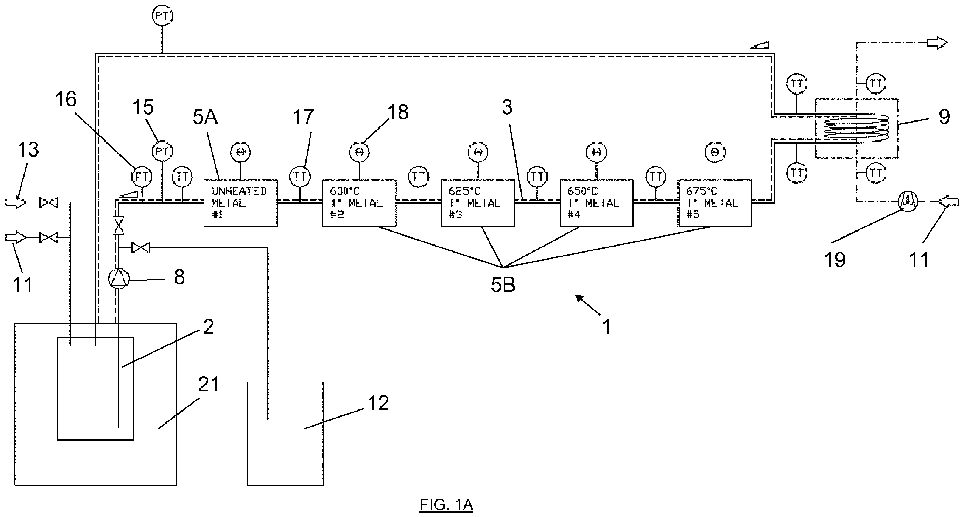

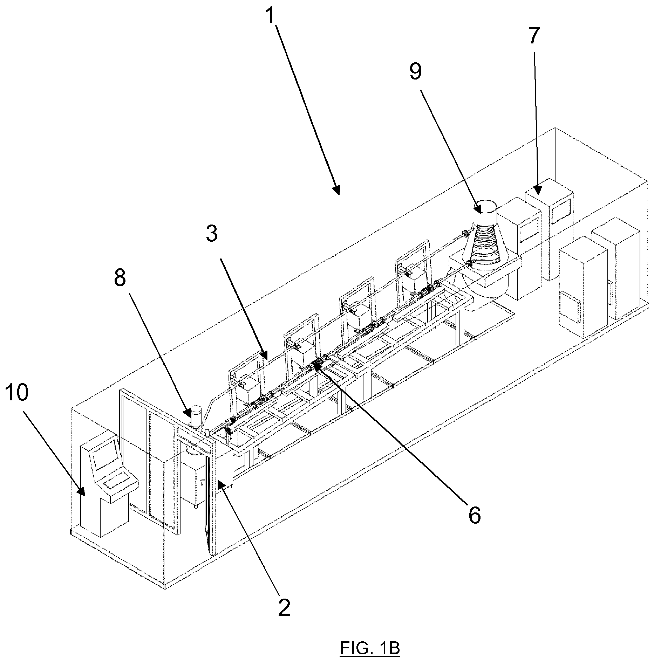

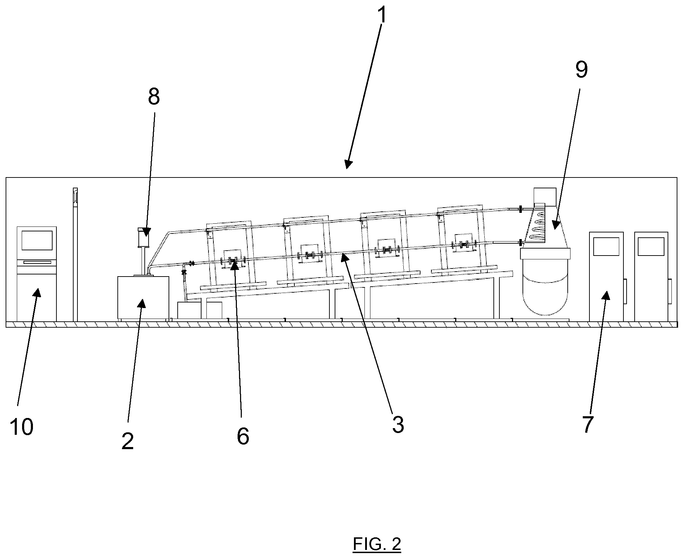

To this end, and as illustrated by Figures 1A, 1B and 2, the installation 1 of the invention comprises a hot tank or pot 2 for heating up to desired temperature and storing a fluid and a circulation loop comprising a pipe 3 in which the fluid circulates thanks to a pump 8. Preferably, the pipe 3 is tilted from the horizontal plane to facilitate drainage and avoid problems of solidification of salt and, more preferably, the pipe 3 is tilted of about 4° from the horizontal plane.

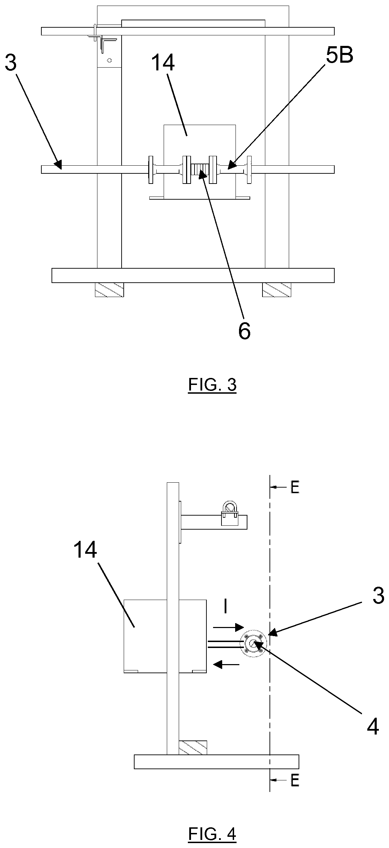

According to the invention, the installation comprises several test points that will be called hereinafter "test stands", located at different locations along the pipe 3. As illustrated by Figures 3 and 4, each test-stand comprises a sample holder 5B to hold, in use, a sample 4 in a specific portion of said pipe 3, and a heating unit 14 comprising an inductor or coil 6 wrapped around the pipe 3 for heating the sample holder 5B and the sample 4. In this way, each sample holder 5B is heated by a specific inductor 6 in order to obtain a different, independently controlled temperature in all the portions of pipe 3, each containing a sample 4. In the installation of the present invention, these specific portions of pipe 3 have the functionality of a test chamber in addition of that of containing the fluid. A power system/supply 7 for each heating unit 14 and inductor 6 is provided near or within the installation 1.

The fluid, for example a molten medium, circulating in the pipe 3 of the loop has a temperature that is essentially constant, and is heated by heating means such as an electrical resistor (not shown) provided around or within heating tank 2.

In this way, the installation of the present invention allows to provide a gradient of temperature between the circulating fluid and each sample holder, in order to simulate real conditions. This coupling between inductor 6 and sample holder 5B allows a high flexibility in terms of thermal gradient between the molten salt and the test tube samples 4, as well as improved accuracy thanks to fast and precise reaching of desired temperature specifically obtained by induction heating. As a result, this test configuration allows a better understanding of the behaviour of a fluid that is in contact with a metal of higher temperature.

For example, in the CSP molten salt solar tower technology, the heat transfer fluid is a molten salt typically entering at 290°C in the solar receiver and coming out thereof at about 565°C. The surface temperature of the solar receiver panels is comprised between 500°C and more than 600°C or even 700°C, according to their position relative to the sun direction. Obviously, the elements of the solar receiver brought into contact with the molten salt are at different temperatures depending on their location. It is therefore important to consider these temperature differences during corrosion tests. To simulate molten salt solar circuit conditions, samples 4 are installed at different locations in the loop circuit, in test stands, in which the pipe 3 acts as a test tube and is at a different temperature from the other test stands. The dynamic test loop of the present invention allows to modulate different temperature gradients between the molten medium and the test tubes (stands) so that to be close to real conditions.

According to a preferred embodiment of the present invention, the minimal temperature of the sample holder 5 will be in the range between 100 and 290°C and the maximal temperature will be in the range between 380 and 800°C, according to the specific fluid used (water, thermal oil or molten salt). These temperatures are obtained very quickly thanks to each inductor 6 heating each portion of the pipe 3 comprising a sample-holder 5.

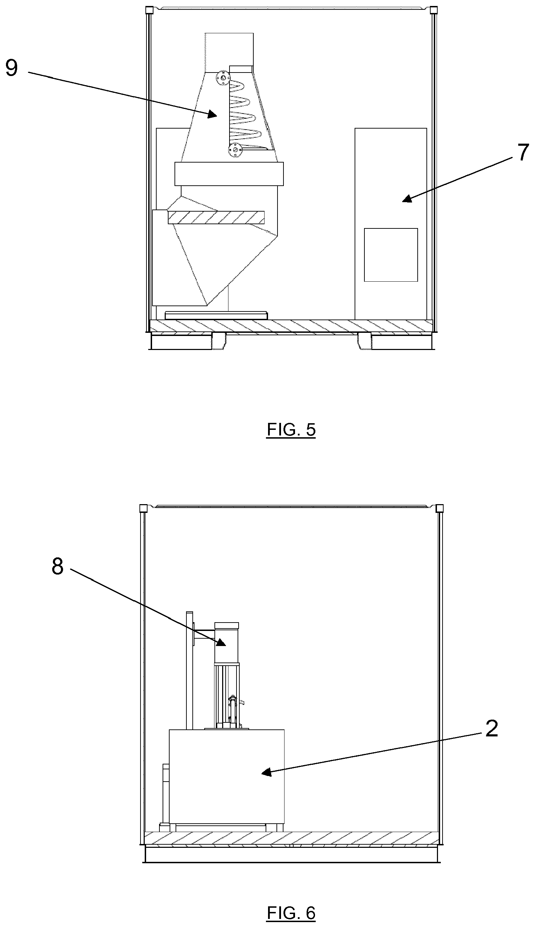

A pump 8 is provided in order to circulate the fluid in the pipe 3, as illustrated by figures 1A, 1B and 6. In case the tests are performed to simulate the molten salt in a CSP solar tower, the molten salt circulates at a velocity comprised between 3 and 6 m/s, preferably of 4m/s. As the test tubes are in fact heated portions of the pipe 3, the flow circulates in the same manner than in the tubes of a solar tower. The results of the tests on the samples 4 are more precise and correspond more to the reality than in tests made in a separate chamber containing a bath.

The fluid used in the invention can be a molten salt such as a binary or ternary alkali nitrate molten salt (e.g. KNO3/NaNO3 ; KNO3/NaNO2/NaNO3), or a carbonate salt, or thermal oil.

In a preferred embodiment of the present invention, the installation comprises an unheated test stand with an unheated sample holder 5A and four heated test stands, where the four heated sample holders 5B are heated respectively for example at 600°C, 625°C, 650°C and 675°C. These temperatures suitably simulate the level of temperature of the solar receiver panel surface according to its respective positions relative to the sun.

The tank 2 comprises an external insulation 21 at its external surface to keep the molten salt at the desired temperature (Fig. 1A). The installation 1 can also comprise a cooling device 9 to avoid the overheating of the molten medium (see Figures 1A, 1B, 2 and 5). The cooling device 9 can comprise a heat exchanger (e.g. air or water heat exchanger). In case the fluid is molten salt, this cooling device allows for example to keep the salt at about 565°C, as in a CSP molten salt tower plant.

Advantageously, the present installation 1 can be provided in the form of a shipping container. In this way, the installation is easily transportable and can be located close to the installation to be analyzed, such as at the base of a solar tower for example.

In use, samples 4 are place on different sample holders 5. Each sample holder 5 is quickly, separately and independently heated at the desired temperature, by its assigned inductor 6, while the fluid located in the tank 2 is heated by an electric resistor. Once the fluid has reached the desired temperature in tank 2, pump 8 circulates the fluid in the different test stands located on the pipe 3. The samples 4, which are hold at an accurate temperature, are then in contact with the fluid which is at another temperature. The turbulent flow of the fluid circulating in the pipe 3, in contact with the samples 4, allows to obtain test conditions as close as possible to the real conditions.

After having been in contact with the fluid and removed from the pipe 3, the samples 4 are analyzed, for example by mass loss analysis, to determine the degradation and corrosion rate of the samples in contact with the fluid. Advantageously the present installation 1 permits to cycle the tests.

## Claims

1. An installation (1) for carrying out dynamic corrosion and degradation tests on samples (4) being in contact with a fluid, comprising :
- a tank (2) for heating and storing, in use, a fluid at a given temperature;
- a looped circuit comprising a pipe (3) containing the fluid during the tests, having a first end and a second end both connected to the tank (2);
- a pump (8) for circulating the fluid in the pipe (3);
- a plurality of test stands located along different portions of the pipe (3), each test stand comprising a sample holder (5B) holding, in use, at least a sample (4) in said portion of the pipe (3) and an inductor (6), wrapped around said portion of pipe (3) and intended to heat the sample holder (5B) to provide, in use, a gradient of temperature between the fluid and the sample (4) during the test.

2. The installation according to claim 1, **characterized in that** it comprises an electrical resistor provided around or within the tank (2) to heat the fluid therein.

3. The installation according to claim 1, **characterized in that** the pipe (3) is tilted from the horizontal, preferably at about 4° from the horizontal.

4. The installation according to claim 1, **characterized in that** the heated sample holders (5B) and the corresponding inductors (6) are in the number of one or more.

5. The installation according to claim 1, **characterized in that** the tank (2) comprises an external insulation (21) and draining means (12).

6. The installation according to claim 1, **characterized in that** it also comprises a cooling device (9) to avoid the overheating of the fluid.

7. The installation according to claim 6, **characterized in that** the cooling device (9) comprises a heat exchanger.

8. A shipping container comprising the installation according to anyone of claims 1 to 7.

9. A method for carrying out dynamic corrosion and degradation tests on samples (4) being in contact with a fluid, by means of the installation according to anyone of claims 1 to 7, comprising at least the following steps of:
- putting metal samples (4) on each of the test stands within the pipe (3) ;
- heating the fluid contained in the tank (2) ;
- circulating the fluid in the pipe (3) according to the looped circuit by activating the pump (8) ;
- cooling the pipe (3) in the cooler by circulating therein a cooling fluid ;
- heating the samples (4) in the test stands using the corresponding inductor (6) to create at each heated test stand a temperature gradient between the fluid and the sample (4) ;
- after having stopped the heating of the fluid and having drained the fluid out of the installation, opening the test stands, removing the samples therefrom, and performing degradation tests on the samples.

10. The method according to claim 9, wherein the degradation tests are weight loss measurement after descaling and micrographic cross-section examination.

11. The method according to claim 9, **characterized in that** the fluid is circulated at a velocity comprised between 2 and 8 m/s.

12. The method according to claim 11, **characterized in that** the fluid is circulated at a velocity of about 4 m/s.

13. The method according to claim 9, wherein the minimal temperature of the sample holders is comprised between 100°C and 290°C and wherein the maximal temperature of the sample holders is comprised between 380°C and 800°C.

14. The method according to claim 13, wherein the heating is operated in order to have, with sample holders at least in number of five, an unheated sample holder (5A) and four sample holders (5B) respectively heated at 600°C, 625°C, 650°C and 700°C.

15. The method according to claim 9, wherein the fluid is heated in the tank (2) from 100°C to 700°C.

16. The method according to claim 9, wherein the pump (8) is run from 7 to 15 m³/s.

17. The method according to claim 9, **characterized in that** the fluid is a molten salt or thermal oil.
